# EUROPEAN PATENT APPLICATION

(11) **EP 2 284 501 A1**
(43) Date of publication of application: **16.02.2011**
(21) Application number: 10170315.5
(22) Date of filing: 21.07.2010
(51) Int. Cl.: G01F 11/02

(54) **Fluid transport cylinder**

(30) Priority: 03.08.2009 IT MI20091408
(71) Applicant: Pirovano S.r.l., 23871 Lomagna (IT)
(72) Inventor: Pirovano, Marco, 23871 LOMAGNA (LC) (IT)
(74) Representative: Vanosi, Adelio Valeriano

(57) **Abstract**

A fluid transport cylinder (12) characterised by comprising a peripheral body (11) within which a piston (6) is sealedly slidable provided with a piston rod (7), not necessarily cylindrical, between the piston rod (7) and the peripheral body there being provided seal means (5) which, together with the outer surface of the piston rod, with the inner surface of said peripheral body and with said piston (6), define a second chamber (15) provided with an access (14) for its pressurization/depressurization, a first chamber (16) being defined by said piston (6), by the inner surface of said peripheral body, and by said base (1), said first chamber (16) comprising a passage (13) for feeding a fluid to the cavity of the piston rod (7), the state of the second chamber (15) defining the position of the piston rod, with consequent possibility of transporting the fluid fed through it into one or more delivery positions.

## Description

The present invention relates to a preferably pneumatic cylinder for fluid transport.

Devices for fluid distribution in batches are known for example from IT 1318228 in the name of Pirovano s.r.l.. These comprise a plurality of terminals disposed substantially in a circle. Each of these terminals presents a valve at a free end and is hinged along a circumference to a table, at the centre of which a delivery port is present. Each terminal can assume a first raised position in which the valve is distant from the delivery port, and a lowered position in which the valve lies at the delivery port. When the valve is in the delivery position it is controlled by an actuator which activates its delivery.

Essentially the delivery port can be connected to any one of these terminals, and hence to each tank, by lowering the relative terminal.

The terminals or arms constructed for this system present the drawback of providing for an articulated system which makes the overall unit costly. In this respect they are themselves expensive and the hinging system is fairly complex.

An object of the present invention is to provide a pneumatic cylinder for fluid transport which enables current distribution terminals in fluid distribution devices to be replaced, and to provide a fluid distribution device comprising these cylinders.

This and other objects are attained by a pneumatic cylinder for fluid distribution formed in accordance with the technical teachings of the accompanying claims.

Further characteristics and advantages of the invention will be apparent from the description of a preferred but non-exclusive embodiment of the pneumatic cylinder, illustrated by way of non-limiting example in the accompanying drawings, in which:
Figure 1 is a section on the line 1-1 of Figure 4 taken when the cylinder piston is in the end-of-stroke position (piston rod retracted);
Figure 2 shows the section of Figure 1 when the piston is in an intermediate position;
Figure 3 is a side view of the cylinder of the present invention;
Figure 4 is a view from above of the cylinder of Figure 3;

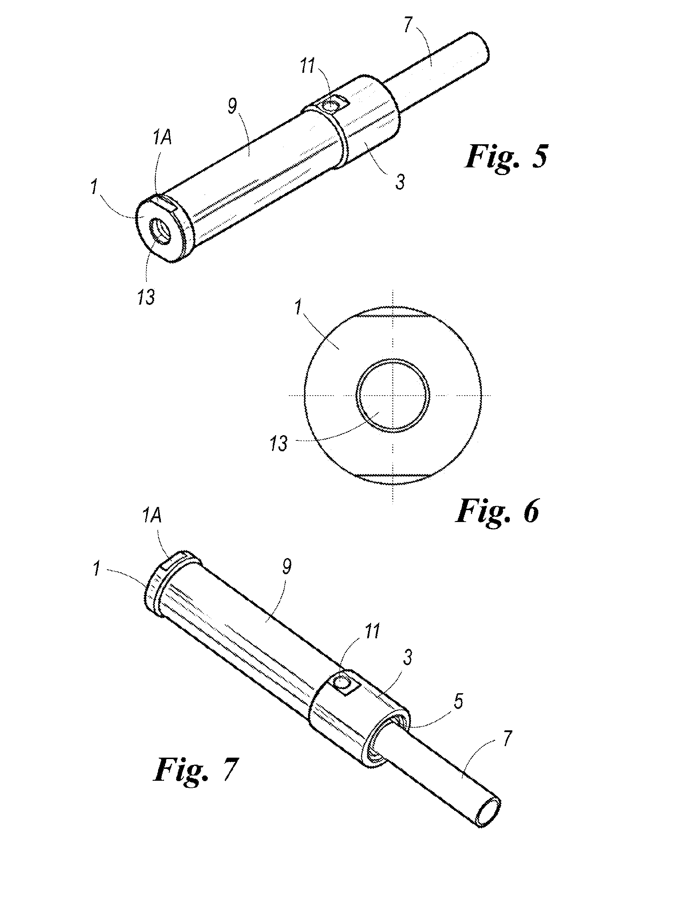

Figures 5 and 7 are perspective views of the cylinder of Figure 3, taken from different angles;
Figure 6 is a rear view of the cylinder of Figure 3;
Figures 8 and 9 are respectively a side view and a top view of a dispensing apparatus where the cylinder of Figure 1 is installed; and
Figures 10 and 11 show the apparatus of Figures 8 and 9 in which the cylinders are replaced by alternative embodiments thereof according to the present invention.

With reference to said figures, these show a fluid transport cylinder indicated overall by the reference numeral 12.

It comprises a peripheral body 11 within which a piston 6 sealedly slides, connected to a preferably cylindrical piston rod 7 at least partially projecting from the peripheral body.

The peripheral body 11 is formed from a preferably cylindrical element 9 (substantially a tubular profile piece, but it can also have a rectangular or square section as the piston), fixed at one end to a base element 1 and at its other end to a head element 3. The head element 3 is provided with a hole 18 for passage of said piston rod 7 and supports a gasket 5 which seals against the outer surface of the piston rod.

The gasket 5 presents, preferably formed in a single piece, a first and a second opposing conical seal surface resting against the piston rod surface, they converging respectively towards the outside and the inside of the cylinder.

The head element presents a portion of lesser diameter cross-section inserted into the cylindrical element. A gasket of O-ring type is provided between the cylindrical element and the head element.

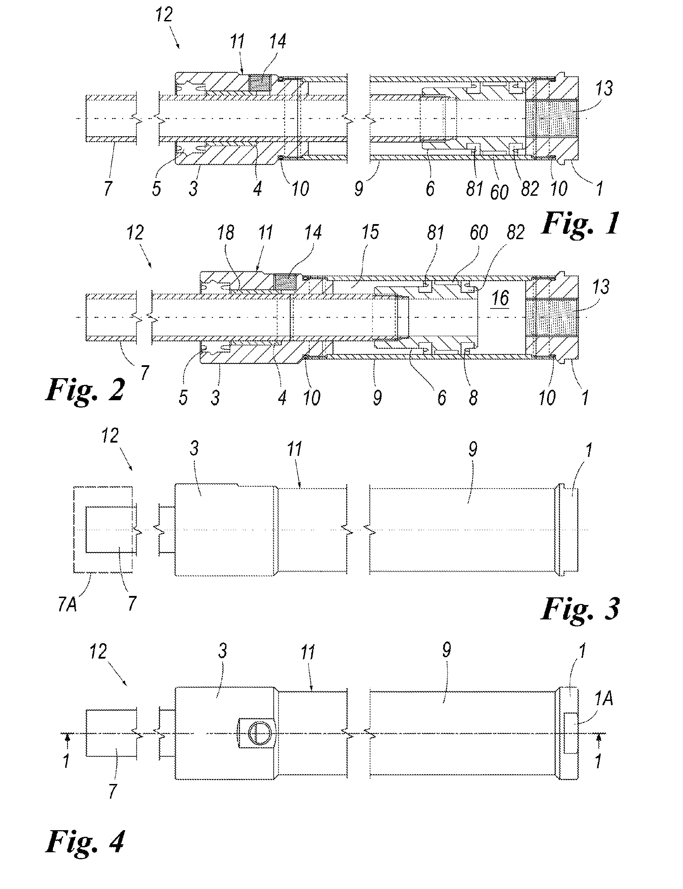

The head element presents a hole 14 (preferably threaded and perpendicular to the piston rod axis) which connects the exterior of the cylinder to a second chamber 15 bounded by the outer surface of the piston rod 7, by the inner surface of the cylindrical body 9 and of the head element, by the piston 9 and by the gasket 5. The chamber 15 is well visible in Figure 2. The hole 14 can also be provided in another position enabling it to communicate with the second chamber 15.

The cylinder base element is fixed to the tubular element 9 in a manner similar to the head element 3, and again in this case a seal gasket 10 is provided. Alternatively, the head and base elements can be crimped, the base element being crimped to the tubular element 9.

In the base element 1 a hole 13 (preferably threaded) is provided connecting the cylinder exterior (and hence the feed fluid) to a first chamber defined by the inner surface of the cylindrical element 9, by the piston 6 and by the base element 1. The hole 13 can also be provided in another position which enables it to communicate with the first chamber 16, but is advantageously provided in the base element with its axis parallel to and preferably coinciding with that of the piston rod 7.

This first chamber 16 also communicates with the outside via a cavity in the piston 6 and in the piston rod 7, at the outer end of which a conventional or dispensing valve can be advantageously applied to intercept/dispense the feed fluid.

The piston 6 is sealedly slidable along the inner surface of the cylindrical element 9 and presents a pair of gaskets 81, 82 to restrain any overpressure of the fluid to be dispensed present in the first chamber 16, and any overpressure of the gas/fluid used for the travel of the piston/piston rod relative to the tubular cylindrical element 9 present in the second chamber 15.

In particular the first gasket 82 and second gasket 81, which act as seal means, present respectively at least one conical surface diverging towards the first chamber 16 and a conical surface diverging towards the second chamber 15. These gaskets can also be formed as a single piece.

The piston 6 has a guide surface 60 interposed between said first and said second gasket.

The end portion 7A of the piston rod 7 provides for a junction unit or presents a surface machined (for example threaded) to enable a shutoff and/or dispensing valve to be connected thereto, for example of the type described in IT 1318228 in the name of Pirovano s.r.l., the description of which is to be considered as incorporated into the present text.

In addition, the base element 1 of the cylinder is machined at 1 A to enable connection by a feed conduit for the fluid to be transported.

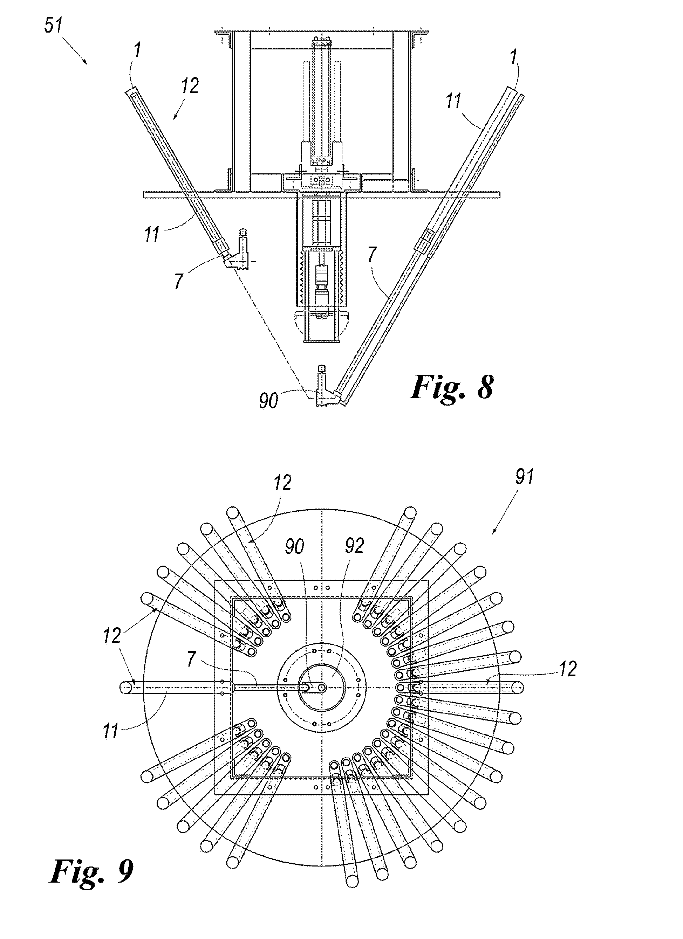

An example of the positioning of the cylinder within the dispensing apparatus 91 is visible in Figures 8 and 9.

Essentially the cylinder 12 is interposed between the delivery valve 90 and the fluid storage tank (not shown) which can consequently feed said cylinder in any known manner, e.g. by a rigid or flexible conduit of any material, by gravity, by pressure under the thrust of pumps or any other similar known element. In the machine a plurality of cylinders 12 will therefore be present, each connected to a respective fluid substance tank, disposed preferably but not essentially along a circumference as in Figure 9.

Essentially the terminals or hinged arms of IT1318228, which in order to transport the valve into a position corresponding with the delivery port had to be rotated about the hinge point and lowered towards the port, are now replaced by the cylinders of the present invention which downwardly "translate" the required valve fixed to the end of the piston rod, at the delivery port.

At the delivery port a three-way valve can also be provided, such as that described in PCT WO 2007042145, which is also to be considered as incorporated for reference.

This valve 92 can be provided with a vertical translational movement to couple to the valve 90 supported by the piston rod 7 once it is superposed on the delivery port.

The operation of the invention is totally apparent to an expert of the art and is substantially the following.

When in use, a delivery valve is mounted on the piston rod 7 and the hole 13 is coupled to a tube connected to a tank of fluid to be dispensed. When fluid delivery is required, the chamber 15 is put under vacuum by a vacuum source connected to the hole 14. It should be noted that the particular shape of the gasket 82 prevents fluid present in the first chamber 16 from being drawn into the second chamber 15.

The piston rod elongates until reaching its end-of-stroke position (piston abutting against the head element) and the valve is operated for delivery. The fluid present in the tank flows through the passage 13 into the first chamber 16, which can also be of depth equal to or close to zero, and from there it passes through the cavity of the piston 6 and of the piston rod 7 to reach the delivery valve. When delivery has ended the valve is closed, possibly washed and dried in known manner (see for example that stated in this respect in IT1318228 in the name of Pirovano s.r.l.) and the second chamber 15 is pressurized. The piston rod 7 retracts to its end-of-stroke position (piston abutting against the base element), to hence attain the rest position.

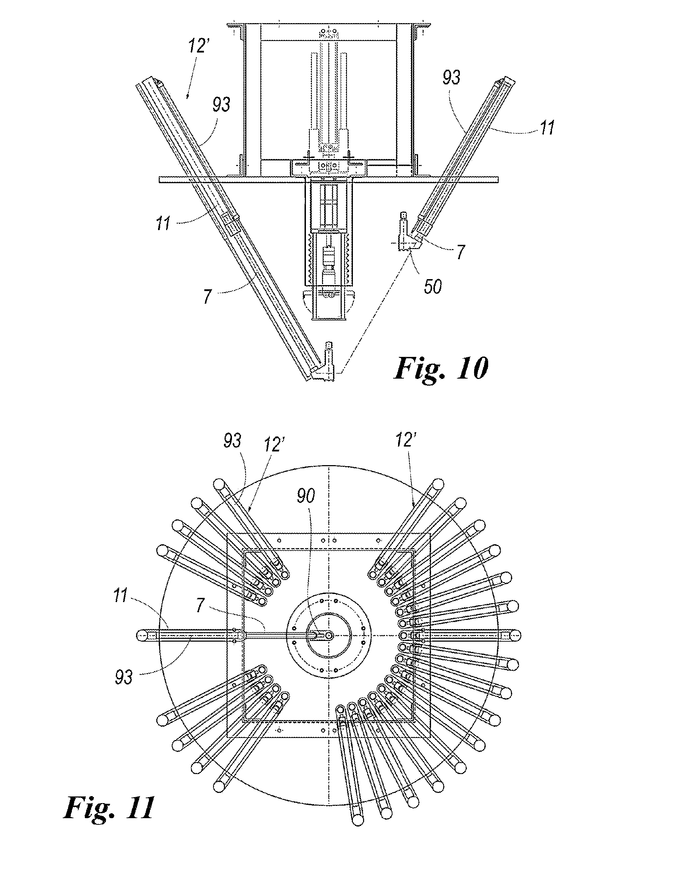

In an alternative embodiment, the second chamber 15 does not comprise systems for putting it under pressure or vacuum, and said seal means 5 could also not be provided. The piston rod movement is achieved by a conventional pneumatic fluid means (pneumatic piston 93) coupled both to the piston rod 7 (via the valve 90 or directly) and to the peripheral element 11. The configuration of the device 12' is well visible in Figure 10, where the same machine as in Figures 8 and 9 is equipped with the device 12'. One embodiment of the invention has been described, however others can be conceived utilizing the same inventive concept.

## Claims

1. A fluid transport device (12) comprising a peripheral body (11) within which a piston (6) is sealedly slidable provided with a piston rod (7) projecting to the outside of the peripheral body, a first chamber (16) being defined by said piston (6), by the inner surface of said peripheral body, and by a base (1) of said peripheral body (11), said first chamber (16) comprising a passage (13) for feeding a fluid to a cavity of the piston rod (7) via the first chamber (16), said cylinder comprising fluid/pneumatic means associated with the piston rod and with the peripheral body such as to move them mutually in such a manner as to define the position of the piston rod relative to the peripheral body, with consequent possibility of transporting the fluid fed through it into one or more delivery positions, **characterized in that** the cavity of the piston rod (7) opens in said first chamber (16).

2. A fluid transport device (12) **characterised in that** said pneumatic means are a pneumatic cylinder with one end associated with the peripheral body (11) and the other end associated with the piston rod (7).

3. A device as claimed in the preceding claim, wherein said fluid/pneumatic means are disposed external to said peripheral body and to said piston rod.

4. A device as claimed in claim 1, wherein between the surface of the piston rod (7) and the peripheral body (11) first seal means (5) are provided which, together with the outer surface of the piston rod, with the inner surface of said peripheral body and with said piston (6), define a second chamber (15) provided with an access (14) for its pressurization/depressurization, the state of pressurization/depressurization of the second chamber, which acts as the pneumatic means, defining the position of the piston rod.

5. A device as claimed in the preceding claim, wherein the piston (6) presents second seal means (81, 82) able to restrain both an overpressure present in the first chamber (16) and an overpressure present in the second chamber (15).

6. A device as claimed in the preceding claim, wherein said second seal means (81, 82) comprise a first gasket (82) presenting at least one conical surface diverging towards the first chamber and a second gasket (81) presenting at least one conical surface diverging towards the second chamber (15).

7. A device as claimed in claim 2, wherein said piston (6) presents a guide surface (60) interposed between said first gasket (82) and said second gasket (81).

8. A device as claimed in one or more of the preceding claims, wherein the peripheral body (11) is formed from a cylindrical element (9) fixed to said base element (1) and to a head element (3) provided with a hole for passage of said piston rod.

9. A device as claimed in the preceding claim, wherein at least one seal gasket (10) is provided between said cylindrical wall (9) and said base element (1) and/or said head element (3).

10. A device as claimed in one or more of the preceding claims, wherein said base element (1) and said head element (3) have a lesser-diameter section, on which said cylindrical element (9) is mounted.

11. A device as claimed in one or more of the preceding claims, wherein said access (14) is provided in said head element (3).

12. A device as claimed in the preceding claim, wherein said access (14) is a threaded hole with its axis perpendicular to that of the piston rod.

13. A device as claimed in one or more of the preceding claims, wherein said first seal means (5) comprise a gasket with a pair of opposing conical surfaces diverging respectively towards the outside and towards the second chamber (15).

14. A device as claimed in one or more of the preceding claims, wherein the end portion (7A) of said piston rod presents machining or a junction unit for fixing a delivery valve.

15. A dispensing apparatus for fluid products of the type comprising a plurality of delivery terminals, each connected to a fluid feed source and comprising a delivery/dispensing valve, said terminals being movable independently of each other between an operative position and a non-operative position, a control member being provided for said valve, to operate it when a delivery terminal is in a position corresponding with a delivery mouth or port in an operative position, at least one of said terminals comprising a device according to one or more of the preceding claims which is able both to manipulate the terminal and to transport the fluid.

16. A dispensing apparatus for fluid products as claimed in the preceding claim, wherein said cylinders are disposed in a position oblique to the vertical axis of the central unit provided for operating the delivery valve when this is in the dispensing position, said cylinders being disposed in a position such as to form a cone frustum.
